Europäisches Patentamt

European Patent Office

Office européen des brevets

(11) Veröffentlichungsnummer: **0 237 931 B1**

# EUROPÄISCHE PATENTSCHRIFT

(45) Veröffentlichungstag der Patentschrift: **14.08.91**

(51) Int. Cl.⁵: **G01M 3/22, E21B 47/10**

(21) Anmeldenummer: **87103473.2**

(22) Anmeldetag: **11.03.87**

(54) **Gerät zum Prüfen der Gasdichtigkeit von Verbindungen zwischen Rohrstücken.**

(30) Priorität: **15.03.86 DE 3608814**

(43) Veröffentlichungstag der Anmeldung:
**23.09.87 Patentblatt 87/39**

(45) Bekanntmachung des Hinweises auf die
Patenterteilung:
**14.08.91 Patentblatt 91/33**

(84) Benannte Vertragsstaaten:
**AT FR GB IT NL**

(56) Entgegenhaltungen:
**EP-A- 0 045 418**
**DE-C- 3 307 813**
**GB-A- 2 056 091**
**GB-A- 2 129 948**
**GB-A- 2 147 425**

(73) Patentinhaber: **Weatherford Oil Tool GmbH**
**Hainhäuser Weg 150**
**W-3012 Langenhagen 1(DE)**

(72) Erfinder: **Jänsch, Manfred**
**Moorkamp 25**
**W-3008 Garbsen 5(DE)**

(74) Vertreter: **Arendt, Helmut, Dipl.-Ing.**
**Patentanwalt Bergiusstrasse 2 c**
**W-3000 Hannover 51(DE)**

Rank Xerox (UK) Business Services

## Beschreibung

Die Erfindung betrifft ein Gerät zum Prüfen der Gasdichtigkeit von Verbindungen zwischen Rohrstücken, insbesondere zwischen Rohren und Rohrmuffen unter Verwendung zweier mit Abstand zueinander angeordneter, ringförmiger, elastischer Dichtungskörper, deren Durchmesser unter axialer Druckbelastung durch in Rohrlängsrichtung bewegbare Druckkolben veränderbar ist, wobei zwischen den Dichtungskörpern die zu überwachende Prüfstelle angeordnet und von einem Dichtflansch eingefaßt ist, der mit einer Bohrung zur Ableitung von Leckgas zu Meßinstrumenten versehen ist, und das Prüfmittel sowohl als Arbeitsmittel zur Betätigung der Druckkolben als auch zum überprüfen der Gasdichtigkeit der Rohrverbindung dient, wobei der erste Dichtkörper rohreinwärts der Prüfstelle auf einem in das Rohr hineinreichenden inneren Tragkörper angeordnet und von innen gegen die Rohrwandung preßbar ist und der zweite, auf einem äußeren Tragkörper angeordnete Dichtkörper um die Außenfläche der Rohrmuffe greift.

Um Undichtigkeiten an Rohrverbindungsstellen zu beseitigen ist es üblich, Verrohrungen einer Leckprüfung zu unterwerfen, bevor sie zum Einsatz kommen und beispielsweise in ein Bohrloch abgesenkt werden. Dabei wird ein unter Druck stehendes Prüfmedium auf eine Verbindung gebracht und der Druck hinsichtlich eines Abfalles überprüft. Nach einem weiteren Prüfverfahren auf Leckstellen ist es bekannt, ein Gas durch zwei miteinander verbundene Rohrstücke zu leiten. Dabei wird der Gasdruck mit Hilfe eines Absperrwerkzeuges von innen aufgebracht. Ein solches Verfahren und ein Werkzeug zur Durchführung des Verfahrens ist beispielsweise in der DE-OS 30 30 665 beschrieben. Es zeigt zwei mit Abstand zueinander liegende ringförmige Dichtungen aus federnd nachgiebigem Material, die durch zwei Kolben, von denen jeder einer der Dichtungen zugeordnet ist, axial zusammengepreßt werden. Dadurch wird erreicht, daß sich die Dichtungen an die inneren Rohrwandungen der miteinander verbundenen Rohrstücke anlegen und somit eine Prüfkammer schaffen, in welche Prüfgas unter Druck, beispielsweise Helium eingeleitet wird. An der Außenseite dieser Prüfkammer sind im Bereich der Prüfstellen Meßinstrumente angeschlossen, mit denen gegebenenfalls austretende Gasmengen erfaßt ("erschnüffelt") werden. Das Werkzeug eignet sich jedoch nicht für das überprüfen von Dichtstellen bei kurzen Rohrstücken, insbesondere nicht bei der Verbindung eines Rohrendes mit einer Rohrmuffe, da die Prüfstelle nur einen geringen Abstand von dem freien Ende der Rohrmuffe bzw. vom Rohrende aufweist. Das bekannte Werkzeug ist lediglich zur vollständigen Einführung in miteinander verbundene Rohre und damit für den Einsatz am Bohrturm geeignet.

Die EP-A-0 045 418 zeigt eine Vorrichung zum Prüfen der Dichtigkeit von Gewindeverbindungen zwischen einem Rohrende und einer aufgeschraubten Muffe gegen den Durchtritt von Flüssigkeiten. Eine Überprüfung der Gasdichtigkeit ist mit dieser Ausführung nicht möglich. Durch eine Vorrichtung nach der GB-A-2 147 425 kann dagegen auch die Gasdichtigkeit einer Rohr- Muffenverbindung geprüft werden. Jedoch wird dabei nur von einem Gummidichtring Gebrauch gemacht, der rohreinwärts angeordnet und in Axialrichtung zusammendrückbar ist. Die zweite Abdichtung befindet sich stirnseitig am freien Muffenende. Die Anpreßkraft zur stirnseitigen Abdichtung wird von der Vorrichtung von außen aufgebracht. Entsprechend aufwendig ist die dafür notwendige Einrichtung. Ein entscheidender Nachteil ist aber darin zu sehen, daß zur Betätigung des axial zusammenpreßbaren Dichtringes ein flüssiges Druckmittel verwendet wird, während notwendigerweise getrennt davon ein gasförmiges Druckmittel für die Gasdichtigkeitsprüfung erforderlich ist.

Der Erfindung liegt die Aufgabe zu Grunde, ein Prüfgerät der eingangs genannten Konstruktion so zu gestalten, daß Verbindungen zwischen kurzen Rohrstücken, insbesondere zwischen einem Rohr und einer Rohrmuffe, auf Leckdichtigkeit bereits im Herstellerwerk geprüft werden können. Die Lösung zeichnet sich dadurch aus, daß der äußere Tragkörper das Rohrende hülsenförmig umfaßt und dabei beide Tragkörper außerhalb des Rohrendes miteinander fest verbunden sind, und daß in einem Zufuhrkanal, welcher das Prüfgas in einen zwischen einem Distanzstück, der Rohrmuffe, dem Rohr und dem Außenumfang des inneren Tragkörpers befindlichen Ringraum leitet, eine Düse mit kalibrierter Bohrung angeordnet ist.

Das Gerät ermöglicht die Zuführung eines Prüfmediums an der Innenfläche der Rohrmuffe und des Rohrendes entlang bis zu einem Dichtpunkt rohreinwärts der Prüfstelle. Das unter Druck stehende Prüfmedium hat dadurch die Möglichkeit, zwischen die Dichtflächen von Rohrmuffe und Rohrendstück zu treten, sofern eine ungenügende Abdichtung vorhanden sein sollte. In diesem Fall tritt das Prüfgas durch den Ringspalt zwischen dem Verschraubungsende der Rohrmuffe und dem Rohraußenmantel aus und kann durch den Dichtflansch und über seine Bohrung einer Leitung zu Meßzwecken zugeführt werden. Das Gerät ist in einfacher Weise auf das freie Ende der Rohrmuffe aufsteckbar. Es greift vorzugsweise mit einem Tragkörper, auf dem der erste Dichtkörper angeordnet ist, in das Rohr hinein, während der zweite Dichtkörper auf einem das Rohrende hülsenförmig umfassenden zweiten Tragkörper angeordnet ist. Beide Tragkörper sind miteinander fest verbunden, vorzugsweise verschraubt. Im Bereich der Prüfstelle ist der Dichtflansch vorgesehen, der mit dem äußeren Tragkörper klammerartig verbunden sein kann. Er besteht aus zwei Halbschalen, die gegeneinander preßbar sind, um die erforderliche Dichtwirkung zum Einschließen der Prüfstelle zu erreichen.

Mit der erfindungsgemäßen Lösung ist es gelungen, ein wirkungsvolles, einfach zu handhabendes Gerät zum Prüfen der Verbindungsstellen zwischen kurzen Rohrstücken bzw. zwischen Rohren und Rohrmuffen zu schaffen, so daß die Dichtprüfung bereits herstellerseitig durchgeführt werden kann und die Anlieferung von Rohren mit mangelhafter Leckdichtigkeit vermieden wird.

In der Zeichnung ist ein Ausführungsbeispiel der Neuerung schematisch dargestellt und nachstehend erläutert.

Es zeigen:

Fig. 1 einen Längsschnitt durch das Prüfgerät, aufgesteckt auf eine durch unterbrochene Strichführung angedeutete Rohrmuffe, die auf das Ende eines Rohres geschraubt ist,

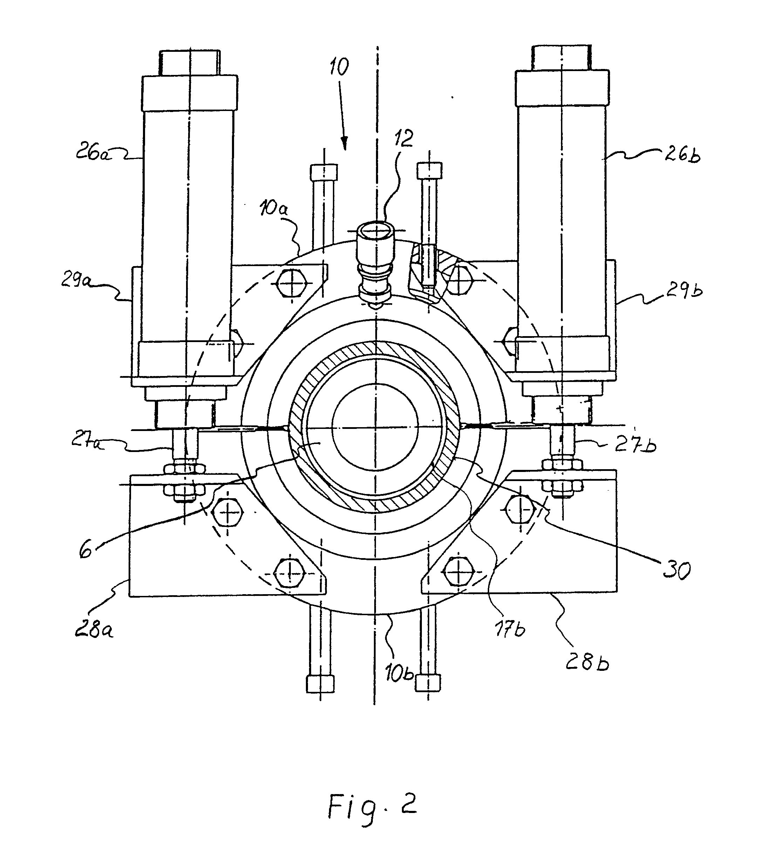

Fig. 2 die Stirnansicht des Prüfgerätes gemäß Fig. 1.

Die wesentlichen Einzelelemente des Gerätes tragen die nachstehend aufgeführten Bezugszeichen:

| | |
|---|---|
| 1 | erster Dichtkörper (Packer) |
| 2 | zweiter Dichtkörper (Packer) |
| 3 | innerer Tragkörper für Dichtkörper 1 |
| 4 | äußerer Tragkörper für Dichtkörper 2 |
| 5 | Gewindezapfen |
| 6 | Endmutter |
| 7 | Distanzstück |
| 7a | Gewindezapfen des Distanzstückes |
| 8 | äußeres Enstück des Tragkörpers 3 |
| 8a | Gewindezapfen des Endstückes 8 |
| 9 | Endmutter des äußeren Tragkörpers 3 |
| 10 | Dichtflansch (Schnüffelklammer) |
| 10a | obere Halbschale des Dichtflansches 10 |
| 10b | untere Halbschale des Dichtflansches 10 |
| 11 | Ringkammer zwischen Dichtflansch 10 und Prüfstelle |
| 12 | Verbindungskupplung der Leckgasleitung |
| 13 u. 14 | O-Ringe |
| 15 | Druckkolben für ersten Dichtkörper |
| 16 | Distanzbuchse |
| 17a u. 17b | Stützringe für ersten Dichtkörper |
| 18 | Entlüftungsbohrung der Distanzbuchse 16 |
| 19 | Distanzbuchse |
| 20 | Druckkolben für zweiten Dichtkörper |
| 21, 22, 23 | Zuführkanäle für Prüfmedium |
| 23a u. 23b | Zweigkanäle |
| 24 | Düse |
| 25 | Verschlußstopfen |
| 26a, 26b | pneumatischer Stellzylinder |
| 27a, 27b | Kolbenstange |
| 28a, 28b | Winkelprofile der unteren Dichtflanschhalbschale |
| 29a, 29b | Winkelprofile der oberen Dichtflanschhalbschale |
| 30 | Rohr |
| 31 | Rohrmuffe |
| 31a | Dichtbund der Rohrmuffe |
| 32 | Entlüftungsbohrung im äußeren Tragkörper 4 |

Nach der festen Verschraubung der Rohrmuffe 31 mit dem Rohr 30 wird das Prüfgerät auf das Ende der Rohrmuffe gesteckt und mit dem aus zwei Halbschalen 10a und 10b bestehenden Dichtflansch 10 verklammert. Der Dichtflansch 10 wird so angeordnet, daß er die Prüfstelle zwischen den Beiden O-Ringen 13 und 14 einschließt und nach außen völlig abdichtet. Geprüft wird der Ringspalt zwischen dem Rohr 30 und der Rohrmuffe 31. Gegebenenfalls austretendes Leckgas kann in der Ringkammer 11 gesammelt wer den, die durch den Dichtflansch 10 und das Rohr 30 bzw. das innere Ende des Rohrflansches 31 gebildet wird.

Nach dem Aufstecken des Prüfgerätes werden die beiden Dichtschalen 10a und 10b des Dichtflansches 10 mit Hilfe pneumatischer Stellzylinder 26a und 26b gegeneinandergepreßt, so daß eine genügende Abdichtung des zu prüfenden Ringspaltes nach außen erreicht wird. Winkeleisen 28a, 28b bzw. 29a, 29b sorgen für die starre Verbindung von Stellzylinder und Kolbenstangen mit den Dichtflanschhalbschalen. Anschließend kann Prüfmedium, beispielsweise Helium, unter Druck über Zufuhrkanäle 21, 22, 23 in das Gerät gepreßt werden. Das Prüfmedium dient dabei sowohl als Arbeitsmittel zur Beaufschlagung der Druckkolben 15 und 20 für die Dichtkörper 1 und 2 als auch zum eigentlichen Überprüfen der Gasdichtigkeit der Gewindeverbindung von Rohr und Rohrmuffe.

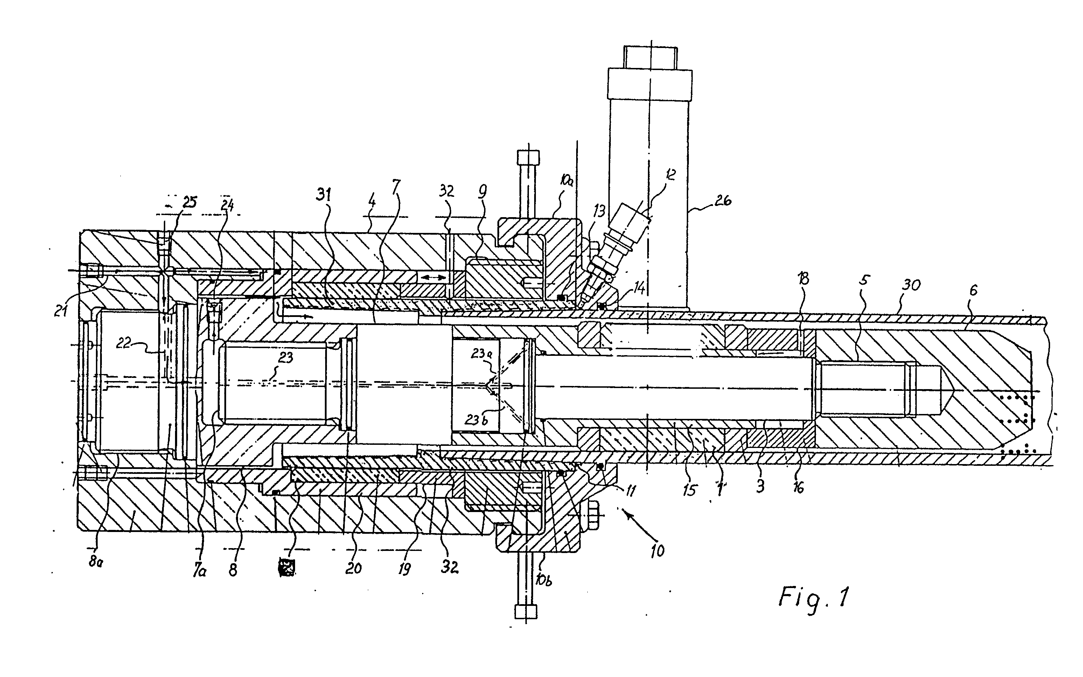

Durch den Druck des Prüfmediums werden die Druckkolben 15 und 20 in Fig. 1 nach rechts verschoben, so daß die Dichtkörper 1 und 2 zusammengepreßt und radiale Durchmesserveränderungen erfahren. Der Dichtkörper 1 wird dadurch fest an den Innenmantel des Rohres 30 und der Dichtkörper 2 an die Außenfläche der Rohrmuffe 31 gepreßt. Das über den Zufuhrkanal 23 und die Düse 24 mit einer kalibrierten Bohrung in den Ringraum zwischen Rohrmuffe 31, Rohr 30 und Außenumfang des inneren Tragkörpers gelangende Prüfmedium ist dadurch nicht in der Lage, weiter in das Rohrinnere hineinzuwandern bzw. an der Außenfläche der Rohrmuffe entlangzuströmen. Dadurch kann der für die Prüfung notwendige Druckaufbau erreicht werden.

Sollte die ringförmige Dichtfläche zwischen dem äußeren Ende des Rohres 30 und dem Dichtbund 31a der Rormuffe 31 nicht genügend abdichten, könnte Prüfgas in das Schraubgewinde eindringen und allmählich bis in die Ringkammer 11 wandern, von wo das Leckgas über die Verbindungskupplung einer Leckgasleitung zugeführt und von dort zu Meßinstrumenten strömen könnte.

Nach der Beendigung des Prüfvorganges werden zunächst die Dichtflanschhalbschalen nach der Entlastung der pneumatischen Druckzylinder abgehoben und anschließend das Prüfgerät von seinem Sitz abgezogen. Die Montage und Demontage des Prüfgerätes sind erkennbar äußerst einfach und dadurch zur raschen Überprüfung der Leckdichtigkeit bereits im Herstellerwerk geeignet.

## Patentansprüche

1. Gerät zum Prüfen der Gasdichtigkeit von Verbindungen zwischen Rohrstücken, insbesondere zwischen Rohren (30) und Rohrmuffen (31) unter Verwendung zweier mit Abstand zueinander angeordneter, ringförmiger, elastischer Dichtungskörper (1,2), deren Durchmesser unter axialer Druckbelastung durch in Rohrlängsrichtung bewegbare Druckkolben (15,20) veränderbar ist, wobei zwischen den Dichtungskörpern (1,2) die zu überwachende Prüfstelle angeordnet und von einem Dichtflansch (10) eingefaßt ist, der mit einer Bohrung zur Ableitung von Leckgas zu Meßinstrumenten versehen ist, und das Prüfmittel sowohl als Arbeitsmittel zur Betätigung der Druckkolben (15,20) als auch zum über-prüfen der Gasdichtigkeit der Rohrverbindung (30,31) dient, wobei der erste Dichtkörper (1) rohreinwärts der Prüfstelle auf einem in das Rohr (30) hineinreichenden inneren Tragkörper (3) angeordnet und von innen gegen die Rohrwandung preßbar ist und der zweite, auf einem äußeren Tragkörper (4) angeordnete Dichtkörper (2) um die Außenfläche der Rohrmuffe (31) greift, dadurch gekennzeichnet, daß der äußere Tragkörper (4) das Rohrende hülsenförmig umfaßt und dabei beide Tragkörper (3,4) außerhalb des Rohrendes miteinander fest verbunden sind, und daß in einem Zufuhrkanal (23), welcher das Prüfgas in einen zwischen einem Distanzstück (7), der Rohrmuffe (31), dem Rohr (30) und dem Außenumfang des inneren Tragkörpers (3) befindlichen Ringraum leitet, eine Düse (24) mit kalibrierter Bohrung angeordnet ist.

2. Gerät nach Anspruch 1, dadurch gekennzeichnet, daß der die Prüfstelle einfassende Dichtflansch (10) aus zwei gegeneinander preßbaren Halbschalen (10a, 10b) besteht.

3. Gerät nach Anspruch 1 oder 2, dadurch gekennzeichnet, daß die Halbschalen (10a, 10b) mit Hilfe von Stellzylindern (26a, 26b) gegeneinander drückbar sind.

4. Gerät nach einem oder mehreren der Ansprüche 1 bis 3, dadurch gekennzeichnet, daß der innere Tragkörper aus mehreren miteinander verschraubten Teilen (3, 6, 7, 8, 16, 17a, 17b) zusammengesetzt ist.

5. Gerät nach einem oder mehreren der Ansprüche 1 bis 4, dadurch gekennzeichnet, daß der Druckkolben (15) für den ersten Dichtkörper (1) hülsenförmig auf dem Tragkörper verschiebbar angeordnet ist und mit einer Außenschulter an einem der Stützringe anliegt, zwischen welchen der erste Dichtkörper (1) angeordnet ist.

6. Gerät nach einem oder mehreren der Ansprüche 1 bis 5, dadurch gekennzeichnet, daß in dem äußeren, hülsenförmigen Tragkörper (4), der gleichfalls hülsenförmig ausgebildete Druckkolben (20) für den zweiten Dichtkörper (2) in Längsrichtung verschiebbar angeordnet ist, wobei der Druckkolben mit einer Innenschulter an dem zweiten Dichtkörper (2) anliegt.

7. Gerät nach Anspruch 6, dadurch gekennzeichnet, daß der äußere Tragkörper (4) durch eine ringförmige Endmutter (9) als Gegenlager für den Druckkolben (20) verschlossen ist und wobei sich zwischen der Endmutter (9) und dem Dichtkörper (2) eine Distanzbuchse (19) befindet.

## Claims

1. An apparatus for testing the gas-tightness of connections between tubular members, more particularly pipes (30) and pipe sockets (31), using two spaced-apart annular resilient sealing members (1, 2) whose diameter can be altered under axial compressive loading by pressure pistons (15, 20) movable in the longitudinal direction of the pipes, the testing place to be monitored being disposed between the sealing members (1, 2) and framed by a sealing flange (10) formed with a bore for conducting leakage gas to measuring instruments, the testing agent acting both as a working medium for actuating the pressure pistons (15, 20) and also for monitoring the gas-tightness of the pipe connection (30, 31), the first sealing member (1) being disposed towards the inside of the pipe from the testing place on an inner supporting member (3) extending into the pipe (30) and being pressible from inside against the pipe wall, the second sealing member (2), which is disposed on an external support member (4), engaging around the outer surface of the pipe socket (31), characterized in that the outer support member (4) engages around the pipe end after the fashion of a sleeve, the two support members (3, 4) being rigidly interconnected outside the pipe end; and a nozzle (24) having a calibrated bore is disposed in a supply channel (23) which conducts the testing gas into an annular space disposed between a spacer member (7), the pipe socket (31), the pipe (30) and the external periphery of the inner support member (3).

2. An apparatus according to Claim 1, characterized in that the sealing flange (10) framing the testing place consists of two half-shells (10a, 10b) which can be pressed against one another.

3. An apparatus according to Claims 1 or 2, characterized in that the half shells (10a, 10b) can be pressed against one another by means of adjusting cylinders (26a, 26b).

4. An apparatus according to one or more of Claims 1 to 3, characterized in that the inner support member is made up of a number of parts (3, 6, 7, 8, 16, 17a, 17b) which are screwed to one another.

5. An apparatus according to one or more of Claims 1 to 4, characterized in that the pressure piston (15) for the first sealing member (1) is disposed to slide after the fashion of a sleeve on the support member and bears via an external shoulder against one of the supporting rings between which the first sealing member (1) is disposed.

6. An apparatus according to one or more of Claims 1 to 5, characterized in that the sleeve-shaped pressure piston (20) for the second sealing member (2) is disposed slideably in the longitudinal direction in the outer, also sleeve-shaped support member (4), the pressure piston bearing via an internal shoulder against the second sealing member (2).

7. An apparatus according to Claim 6, characterized in that the outer support member (4) is closed by an annular end nut (9) acting as an abutment for the pressure piston (20), a spacing bush (19) being disposed between the end nut (9) and the sealing member (2).

## Revendications

1. Appareil de contrôle de l'étanchéité au gaz de raccords entre morceaux de tube, en particulier entre des tubes (30) et des manchons tubulaires (31) avec utilisation de deux corps d'étanchéité annulaires élastiques (1,2) disposés avec un espacement l'un par rapport à l'autre, dont le diamètre sous charge de pression axiale est reste modifiable par des pistons de compression (15,20) mobiles en direction longitudinale du tube, l'emplacement d'essai à surveiller étant disposé entre les corps d'étanchéité (1,2) et étant bordé par une bride d'étanchéité (10) qui est pourvue d'un perçage pour l'évacuation de gaz de fuite vers des instruments de mesure et le moyen d'épreuve sert aussi bien de fluide de travail pour l'actionnement des pistons de compression (15,20) que pour la vérification de l'étanchéité au gaz du raccordement de tube (30, 31), le premier corp d'étanchéité (1) étant monté, du côté de l'emplacement d'essai situé vers l'intérieur du tube, sur un corps porteur intérieur (3) pénétrant dans le tube (30) et pouvant être pressé de l'intérieur contre la paroi du tube et le second corps d'étanchéité (2), monté sur un corps porteur externe (4), embrassant la surface extérieure du manchon de tube (31), caractérisé en ce que le corps extérieur (4) entoure l'extrémité de tube à la façon d'une douille et les deux corps porteurs (3,4) sont alors fixement reliés l'un à l'autre extérieurement à l'extrémité de tube et en ce qu'une buse (24) à alésage calibré est montée dans un espace annulaire se trouvant entre une pièce d'écartement (7), le raccord de tube (31), le tube (30) et la périphérie externe du corps porteur intérieur (3).

2. Appareil selon la revendication 1, caractérisé en ce que la bride d'étanchéité (10), bordant l'emplacement d'essai, consiste en deux demi-coquilles (10 a, 10 b) pouvant être pressées l'une contre l'autre.

3. Appareil selon la revendication 1 ou 2, caractérisé en ce que les demi-coquilles (10 a, 10 b) peuvent être pressées l'une contre l'autre à l'aide de cylindres positionneurs (26 a, 26 b).

4. Appareil selon une ou plusieurs des revendications 1 à 3, caractérisé en ce le corps porteur intérieur est composé de plusieurs éléments (3, 6, 7, 8, 16, 17 a, 17 b) assemblés par vissage les uns avec les autres.

5. Appareil selon une ou plusieurs des revendications 1 à 4, caractérisé en ce que le piston de compression (15) pour le premier corps d'étanchéité (1) est monté à la façon d'une douille de manière coulissante sur le corps porteur et s'applique par un épaulement extérieur contre l'une des bagues d'appui entre lesquelles est monté le premier corps d'étanchéité (1).

6. Appareil selon une ou plusieurs des revendications 1 à 5, caractérisé en ce que le piston de compression (20), également réalisé en forme de douille, pour le second corps d'étanchéité (2), est monté de façon coulissante en direction longitudinale dans le corps porteur extérieur (4) en forme de douille, le piston de compression s'appliquant par un épaulement interne contre le second corps d'étanchéité (2).

7. Appareil selon la revendication 6, caractérisé en ce que le corps porteur extérieur (4) est fermé par un écrou d'extrémité annulaire (9) formant contre-butée pour le piston de compression (20) et un manchon d'écartement (19) se trouvant entre l'écrou d'extrémité (9) et le corps d'étanchéité (2).

Fig. 1

Fig. 2